# EUROPEAN PATENT APPLICATION

(11) **EP 4 827 076 A1**
(43) Date of publication of application: **21.10.2026**
(21) Application number: 26168833.7
(22) Date of filing: 30.03.2026
(51) Int. Cl.: H04N 1/00, B41J 29/13

(54) **IMAGE READING APPARATUS AND RECORDING APPARATUS WITH SPECIFIC COVER ARRANGEMENT FOR PLACING THE DOCUMENTS**

(30) Priority: 14.04.2025 JP 2025066500
(71) Applicant: Canon Kabushiki Kaisha, Tokyo 146-8501 (JP)
(72) Inventor: NOZAWA, Hideyuki, Tokyo (JP); SUZUKI, Yoshiaki, Tokyo (JP); TOKUDA, Kouhei, Tokyo (JP)
(74) Representative: WESER & Kollegen Patentanwälte PartmbB

(57) **Abstract**

An image reading apparatus includes: a reading unit configured to read a document; a first cover portion forming a part of an upper surface of the image reading apparatus, the first cover portion being configured so that the document read by the reading unit can be placed thereon; a second cover portion positioned below the first cover portion and configured to cover an upper portion of the reading unit, the second cover portion forms a part of an exterior housing of the image reading apparatus; and a conveyance path for conveying a document inserted from an insertion opening between the first cover portion and the second cover portion toward the reading unit.

## Description

### TECHNICAL FIELD

The present disclosure relates to an image reading apparatus and to a recording apparatus equipped with an image reading apparatus.

### BACKGROUND

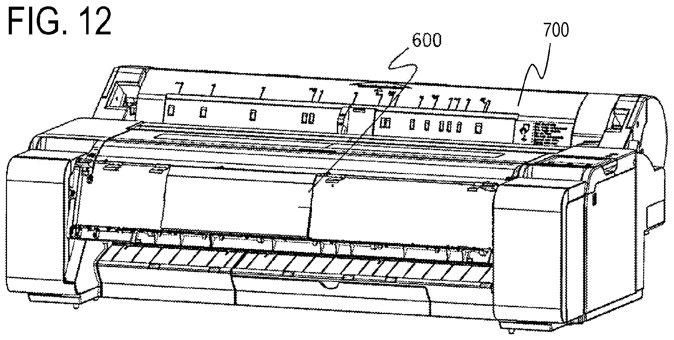

Recording apparatuses such as printers can be categorized into single-function printers not mounted with an image reading portion that scans and reads documents and multifunction printers mounted with such an image reading portion. As single-function printers, configurations in which an image reading apparatus separate from a recording apparatus is arranged adjacent to the recording apparatus are known. FIG. 12 is a perspective view representing an example of a single-function printer and showing a configuration example in which an image reading apparatus 700 supported by a supporting member is arranged adjacent to the rear of a recording apparatus 600.

On the other hand, Japanese Patent Application Publication No. 2024-001853 discloses a multifunction printer in which an upper surface (top surface) of an exterior housing is formed in a single flat shape, and a document conveyance path which leads to an image reading portion and which opens in the upper surface is covered by an openable cover.

In the configuration described above, depending on where a user stands, an insertion position for a document to be scanned by the image reading portion may be difficult to see and may potentially cause difficulties during document placement.

### SUMMARY

The present disclosure is directed to improve operability of an image reading apparatus during document placement.

The present disclosure in its first aspect provides an image reading apparatus as specified in claim 1. Optional features are specified in claim 2 to 18.

According to the present disclosure, operability of an image reading apparatus during document placement can be improved.

Features of the present disclosure will become apparent from the following description of embodiments with reference to the attached drawings. The following description of embodiments is described by way of example.

### BRIEF DESCRIPTION OF THE DRAWINGS

FIG. 1 is a schematic sectional view showing a main configuration of a printer according to an embodiment.
FIG. 2 is an explanatory diagram of a roll sheet and a spool shaft according to the embodiment.
FIG. 3 is a perspective view showing an external appearance of the printer according to the embodiment.
FIG. 4 is a partial sectional view showing a peripheral configuration of a reading portion according to the embodiment.
FIG. 5 is a diagram illustrating a situation where a reading portion cover according to the embodiment is at an open position.
FIG. 6 is a perspective view showing a part of an upper guide portion and a lower guide portion according to the embodiment.
FIGS. 7A to 7C are explanatory diagrams of switching of positions of the upper guide portion according to the embodiment.
FIGS. 8A and 8B are diagrams illustrating a general configuration of a locking structure of the upper guide portion according to the embodiment.
FIGS. 9A and 9B are perspective views showing the locking structure of the upper guide portion according to the embodiment.
FIGS. 10A and 10B are explanatory diagrams of a positional relationship between a cam and a locking portion according to the embodiment.
FIG. 11 is a diagram illustrating a situation where the upper guide portion according to the embodiment is at a third position.
FIG. 12 is a perspective view showing an example of a single-function printer.

### DESCRIPTION OF THE EMBODIMENTS

Hereinafter, a description will be given, with reference to the drawings, of various exemplary embodiments (examples), features, and aspects of the present disclosure. However, the sizes, materials, shapes, their relative arrangements, or the like of constituents described in the embodiments may be appropriately changed according to the configurations, various conditions, or the like of apparatuses to which the disclosure is applied. Therefore, the sizes, materials, shapes, their relative arrangements, or the like of the constituents described in the embodiments do not intend to limit the scope of the disclosure to the following embodiments. In addition, not all features described in the following embodiments are essential to solutions provided by the disclosure.

Hereinafter, while a multifunction printer adopting an inkjet system and being equipped an image reading apparatus will be described as an example of a recording apparatus, applications of the present disclosure are not limited to such configurations. For example, various systems can be adopted as inkjet systems including systems using heating elements, systems using piezoelectric elements, systems using electrostatic elements, and systems using MEMS elements. In addition, printing systems are not limited to inkjet systems and various systems including electrophotographic systems and thermal transfer systems are also applicable.

### Configuration of Printer

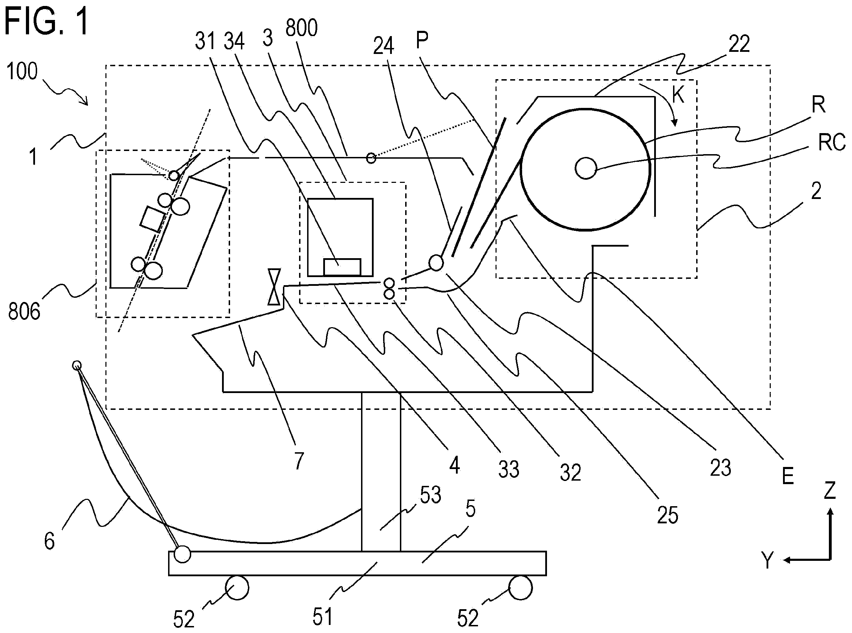

A recording apparatus according to an embodiment of the present disclosure will be described. The recording apparatus according to the present embodiment is a printer 100 that is a multifunction printer equipped with a reading portion capable of reading images on documents. FIG. 1 is a schematic sectional view showing a main configuration of the printer 100 according to the present embodiment. In the following description, a left-right direction (width direction) of the printer 100 is defined as an X-direction, a front-back direction as a Y-direction, and a vertical direction (height direction) as a Z-direction. When the printer 100 is viewed from a front side, a +X-direction in the width direction is defined as a rightward direction and a -X-direction as a leftward direction. A +Y-direction in the front-back direction is defined as a forward direction (first direction) and a -Y-direction a rearward direction (second direction). A +Z-direction in the vertical direction is defined as an upward direction and a -Z-direction a downward direction. FIG. 1 is a schematic sectional view when the printer 100 is viewed in the leftward direction.

The printer 100 is equipped with an apparatus main body 1, a sheet supply portion 2 that is a sheet supply apparatus, a recording portion 3 that is a processing portion of recording material such as sheets, a cutter 4, a stand 5, a basket 6, a discharge guide 7, and a reading portion 806 that is an image reading apparatus for reading images on documents. In the present specification, recording materials such as sheets supplied from cut sheets P or roll sheets R, as well as original documents, will be collectively referred to simply as sheets. The reading portion 806 is arranged on a front surface side of the printer 100, the sheet supply portion 2 is arranged on a rear surface side of the printer 100, and the recording portion 3 is arranged between the reading portion 806 and the sheet supply portion 2 in the front-back direction. The basket 6 for storing sheets after completion of a recording operation or a reading operation is arranged directly below the reading portion 806.

The apparatus main body 1 holds each portion that constitutes the printer 100 and is supported by the stand 5 at a height above the installation floor surface where it is convenient for a user to operate. The stand 5 has a leg portion 51, a plurality of casters 52 provided on a bottom surface of the leg portion 51, and a column portion 53 connecting the leg portion 51 and the apparatus main body 1 to each other. The casters 52 enable the user to readily move the printer 100 on an installation surface.

The sheet supply portion 2 is equipped with a roller holder (not illustrated) as a roll holding portion that rotatably supports a roll sheet R around which a sheet is wound near both end portions of a rotating shaft RC. Furthermore, the sheet supply portion 2 is equipped with a roll cover 22 that covers an upper portion of the roll sheet R and a supply passage 23 that guides the sheet pulled out from the roll sheet R and the cut sheet P toward the recording portion 3. The roll cover 22 is rotatably supported around a rotational center approximately coincident with a rotational center of the rotating shaft RC.

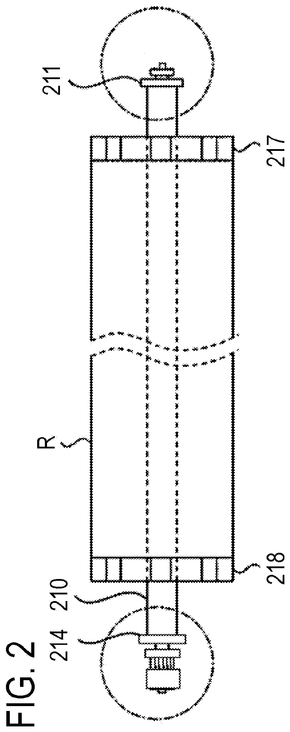

FIG. 2 is an explanatory diagram of the roll sheet R and a spool shaft 210. The spool shaft 210 is mounted to the roll sheet R. The spool shaft 210 has a flange 217 fixed to one end of the roll sheet R in the width direction and a flange 218 fixed to another end, and the spool shaft 210 is mounted to the roll sheet R via the flanges 217 and 218. Due to the roll sheet R being supported by the flanges 217 and 218, the roll sheet R and the spool shaft 210 rotate as one.

In addition, the spool shaft 210 has a bearing 211 provided at an end portion on the side of the flange 217 and a reference bearing 214 provided at an end portion on the side of the flange 218. The spool shaft 210 penetrates the bearing 211 and the reference bearing 214, and is freely rotatable in a circumferential direction relative to each bearing. The reference bearing 214 is a positioning portion that positions the spool shaft 210 relative to the roll holder of the printer 100 in the width direction of the roll sheet R.

The roll holder has an opening portion for guiding the spool shaft 210 to which the roll sheet R is fixed into the sheet supply portion 2 and a downward inclined surface that guides the spool shaft 210 from the opening portion. The inclined surface guides the spool shaft 210 to which the roll sheet R to a placement position. The roll holder rotatably supports the roll sheet R at the placement position.

The roll cover 22 protects the roll sheet R from contamination such as dust by covering an upper surface of the roll sheet R in a state of being held by the roll holder. The roll cover 22 is configured to be rotatable in a direction of an arrow K from a protection position shown in FIG. 1 to an open position where the roll sheet R and the roll holder are opened. The user can attach/detach the roll sheet R to/from the roll holder in a state where the roll cover 22 is at the open position.

The roll cover 22 is provided at a position where an inside portion of the roll cover 22 does not come into contact with an outer circumferential portion of the roll sheet R mounted to the roll holder. To realize such a configuration, the roll cover 22 is desirably configured to rotate approximately coaxially with the roll sheet R held by the roll holder.

The supply passage 23 is configured to guide sheets (roll sheet R or cut sheet P) toward the recording portion 3. The supply passage 23 is constituted of an upper guide 24, a lower guide 25, and the like, and a gap (narrow path) between the upper guide 24 and the lower guide 25 arranged so as to oppose each other functions as a sheet guide path. Accordingly, the supply passage 23 guides one end of the sheet on a side closer to the recording portion 3 (leading end in a conveying direction) in the direction of the recording portion 3. The supply passage 23 includes a guide path that extends forward and diagonally downward in the direction of the recording portion 3 from an introduction portion E that is a sheet insertion portion. The upper guide 24 and the lower guide 25 are each provided with a rotatable auxiliary roller (not illustrated) to assist in the smooth passage of the sheet.

The recording portion 3 is a printing portion that performs a printing operation (recording operation) on the supplied sheet at a predetermined printing position (recording position). For example, the recording portion 3 is capable of recording images on the sheet based on information of a document read by the reading portion 806 or image information sent from an external device. The recording portion 3 is equipped with a recording head 31 that is recording means, a conveying roller 32 that is conveying means for conveying sheets, and a platen 33 that guides the sheet during a printing operation. The recording head 31 is positioned above the platen 33, and the sheet is conveyed between the recording head 31 and the platen 33 by the conveying roller 32 positioned on an upstream side of the platen 33 and the recording head 31 in the conveying direction. Furthermore, the recording portion 3 is equipped with a carriage 34 that detachably holds the recording head 31 and causes the recording head 31 to perform reciprocal scanning in a direction orthogonal to the sheet conveying direction. During printing, an image is printed (recorded) on the sheet as discharge of ink from the recording head 31 having been synchronized with the reciprocation of the carriage 34 and conveyance of the sheet are alternately repeated.

The cutter 4 is provided on a downstream side of the print position in the sheet conveying direction. The cutter 4 is a cutting portion that cuts the sheet when the sheet has been pulled out from the roll sheet R. The discharge guide 7 that guides the sheet of which a printing operation has been completed to the basket 6 that collects and holds sheets is provided on a downstream side of the cutter 4 in the conveying direction. The discharge guide 7 is inclined downward toward the front side of the printer 100, and the sheet of which a printing operation has been completed slides down the inclined surface under its own weight while being supported from below by the basket 6 and is then stored in the basket 6.

The basket 6 is a storage portion that is supported by the stand 5 and configured to be capable of storing sheets that fall after being discharged from the discharge guide 7 or the reading portion 806. The basket 6 can be folded or collapsed as needed to save space when not in use.

Next, a case of using the roll sheet R will be described in greater detail. Inserting the leading end of the roll sheet R held in the roll holder into an introduction portion E causes the sheet to be supplied to the recording portion 3 through the supply passage 23. In the recording portion 3, an image is printed on the sheet as discharge of ink from the recording head 31 and conveyance of the sheet are alternately repeated. After printing is completed, a rear end portion of the printed image is conveyed to the position of the cutter 4 to be cut. The separated roll sheet R slides down the downward inclined surface of the discharge guide 7 under its own weight, and falls toward the basket 6 to be stored therein.

### Exterior Housing of Printer

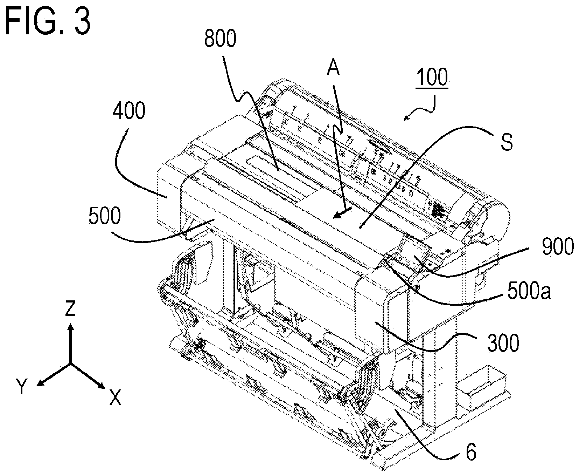

Next, the exterior housing of the printer 100 will be described. FIG. 3 is a perspective view showing an external appearance of the printer 100. The exterior housing of the printer 100 is constituted of a plurality of cover portions that cover internal units such as a right ink tank cover 300, a left ink tank cover 400, a reading portion cover 500, a main body cover 800, and the roll cover 22 described above.

The right ink tank cover 300, the left ink tank cover 400, and the reading portion cover 500 are all arranged on a front surface side of the printer 100. The right ink tank cover 300 is arranged on a right side and covers the front, above, and side of an ink tank that is a storage portion for storing ink. In addition, the left ink tank cover 400 is arranged on a left side and covers the front, above, and side of the ink tank. In addition, the reading portion cover 500 is arranged in a central portion of the printer 100 in the left-right direction or, in other words, between the right ink tank cover 300 and the left ink tank cover 400, and covers the front and above the reading portion 806. The reading portion cover 500, the main body cover 800, and the roll cover 22 each include a part of the upper surface of the printer 100 and are arranged in this order from the front side in the front-back direction. In addition, the roll cover 22 is positioned above the main body cover 800, and the main body cover 800 is positioned above the reading portion cover 500.

The main body cover 800 is adjacent to a rear side of the reading portion cover 500 in the front-back direction and covers an upper portion of the recording portion 3. At least a part of the main body cover 800 is configured to be openable and closable. By opening a part of the main body cover 800 and exposing the inside of the apparatus main body 1, the user can reach internal mechanisms and perform tasks such as replacing the recording head 31 or clearing paper jams. In addition, preferably, at least a part of the main body cover 800 is formed of a transmissive material. Forming the main body cover 800 transparent allows for visual confirmation that printing operations are proceeding normally and enables operational checks during printing.

An operating portion 900 for the user to operate the printer 100 is provided on a right side of the main body cover 800 and a rear side of the right ink tank cover 300. The operating portion 900 is an operating panel facing the front of the printer 100. Therefore, the user can operate the operating portion 900 while standing on a front surface side (front side) of the printer 100.

### Configuration of Reading Portion

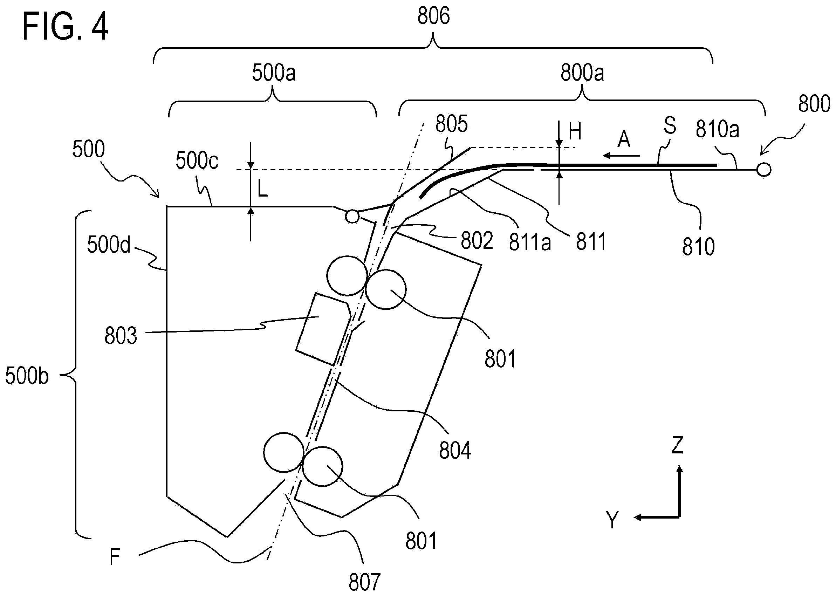

Next, the reading portion 806 configured to be capable of reading images on the sheet S that is a document or the like will be described in greater detail. FIG. 4 is a schematic partial sectional view showing a peripheral configuration of the reading portion 806 when the printer 100 is viewed in the leftward direction.

The reading portion 806 is an image reading apparatus equipped with a conveyance portion 801 constituted of a conveying roller and the like, a reading unit 803 that reads documents, a conveyance path 804 including an insertion opening 802 and a discharge port 807, and the reading portion cover 500. The conveyance portion 801 includes a roller pair positioned on an upstream side and a downstream side relative to the reading unit 803 in the conveying direction of the sheet S, and conveys the sheet S along the conveyance path 804.

The conveyance path 804 is a path for conveying the sheet S to the reading unit 803. A conveying passage of the sheet S in the conveyance path 804 has an approximately linear shape, and the conveyance path 804 extends downward and forward from the insertion opening 802 toward the discharge port 807. The conveying passage of the conveyance path 804 is a straight-line connecting nip portions of two roller pairs of the conveyance portion 801. In FIG. 4, an imaginary line F that extends the conveying passage of the sheet S in the conveyance path 804 is depicted by a two-dot chain line. In other words, the imaginary line F is a line connecting and extending the nip portions of roller pairs respectively arranged on the upstream side and the downstream side of the reading unit 803. In the present embodiment, the conveyance path 804 is a gap between the main body cover 800 and the reading portion cover 500. In other words, a front surface of the main body cover 800 and a rear surface of the reading portion cover 500 constitute a wall portion of the conveyance path 804.

The reading unit 803 is arranged so as to oppose the sheet S as it passes through the conveyance path 804 and reads the image on the sheet S conveyed to an opposing position. The reading unit 803 is arranged between the two roller pairs of the conveyance portion 801 in the conveying direction of the sheet S. In addition, the reading unit 803 is fixed to the reading portion cover 500.

The insertion opening 802 is an opening formed in an upper portion and a rear end portion (an end portion adjacent to the main body cover 800) of the reading portion cover 500 and opens upward. In other words, the insertion opening 802 is an opening formed between the reading portion cover 500 and the main body cover 800, and the reading portion cover 500 and the main body cover 800 have a wall portion of the insertion opening 802, respectively. In addition, the discharge port 807 is an opening formed in a lower portion and a rear end portion of the reading portion cover 500 and opens toward the basket 6 below.

The main body cover 800 is a cover member (first cover member) that has an upper cover portion 800a (first cover portion) including a part of the upper surface of the printer 100. The upper cover portion 800a of the main body cover 800 includes a placement portion 810 configured such that the sheet S to be read by the reading portion 806 can be placed thereon and a lower guide portion 811 adjacent to the front of the placement portion 810. The placement portion 810 has a horizontal upper surface 810a (parallel to the X-Y plane) on which the sheet S can be placed. In other words, the main body cover 800 including the upper surface 810a is also a constituent element of the reading portion 806. The lower guide portion 811 has an inclined surface 811a which is connected to a forward end portion of the upper surface 810a of the placement portion 810 and which inclines downward as it extends forward. In other words, the inclined surface 811a is formed in the forward end portion of the main body cover 800 and the upper surface 810a that is an uppermost surface of the upper cover portion 800a is formed to the rear of the inclined surface 811a. The upper surface 810a of the placement portion 810 and the inclined surface 811a of the lower guide portion 811 are parts of the upper surface of the printer 100, respectively. The forward end portion of the lower guide portion 811 is connected to the wall portion that forms the insertion opening 802 and the lower guide portion 811 guides the sheet S to the insertion opening 802.

The placement portion 810 is rotatably mounted to the apparatus main body 1 around a rotation axis parallel to the left-right direction (X-direction) and is configured to be movable between a closed position where the recording portion 3 is covered and an open position where the recording portion 3 is exposed. The rotation axis of the placement portion 810 is positioned in the rearward end portion of the main body cover 800, and the user can expose the inside of the printer 100 by opening (move to the open position) the placement portion 810 of the main body cover 800. In the present embodiment, the placement portion 810 is formed separately from the lower guide portion 811 and the placement portion 810 rotates independently from the lower guide portion 811.

The reading portion cover 500 has an upper cover portion 500a and a front cover portion 500b and is a cover member (second cover member) that forms a part of the exterior housing of the reading portion 806 and the conveyance path 804. The upper cover portion 500a (second cover portion) is a portion which has a horizontal upper surface 500c and which covers an upper portion of the reading unit 803 and the like. In addition, the insertion opening 802 that opens upward is formed in the rearward end portion of the upper cover portion 500a. As described above, the upper cover portion 800a has a wall portion that forms the insertion opening 802, and the insertion opening 802 can also be said to be formed between the upper cover portion 500a and the upper cover portion 800a. The upper surface 500c that is an uppermost surface of the reading portion cover 500 is a part of the upper surface of the printer 100 and is positioned lower than the upper surface 810a of the main body cover 800 by a height L. The front cover portion 500b is a portion which has a front surface 500d that is perpendicular to the front-back direction and which covers the front of the reading unit 803 and the like.

As described above, the upper surface of the printer 100 includes the upper surface 810a and the inclined surface 811a of the main body cover 800 and the upper surface 500c of the reading portion cover 500. In other words, the printer 100 is equipped with the upper cover portion 800a (first cover portion) that forms a part of the upper surface of the printer 100 and the upper cover portion 500a (second cover portion) which is adjacent to the upper cover portion 800a and which forms a part of the upper surface of the printer 100 below the upper cover portion 800a. In addition, the upper cover portion 500a of the reading portion cover 500 in which the insertion opening 802 opens is positioned below the upper cover portion 800a of the main body cover 800.

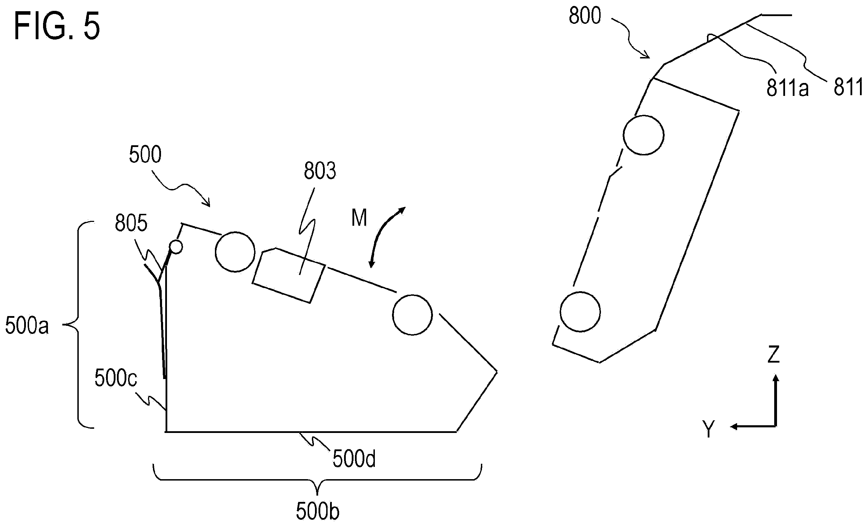

The reading portion cover 500 is mounted to the apparatus main body 1 so as to be rotatable in a rotating direction M around a rotation axis parallel to the left-right direction (X-direction). More specifically, the reading portion cover 500 is configured to be movable between a closed position where the reading unit 803 and the like are protected and an open position where the reading portion cover 500 separates from the main body cover 800 and the reading unit 803 and the wall portion of the conveyance path 804 are exposed. FIG. 5 is a diagram illustrating a situation where the reading portion cover 500 is at the open position. In addition, FIG. 4 shows a situation where the reading portion cover 500 is at the closed position. The reading unit 803 and a part of the rollers of the conveyance portion 801 are mounted to the reading portion cover 500 and the reading portion cover 500 integrally rotates with these units and members. The rotation axis of the reading portion cover 500 is positioned in the lower end portion of the reading portion cover 500 and the reading portion cover 500 can open to the front of the printer 100. By opening (moving to the open position) the reading portion cover 500, the user can open the conveyance path 804 and clear jams of the sheet S on the conveyance path 804, clean the reading unit 803, and the like.

The upper cover portion 500a of the reading portion cover 500 is provided with an upper guide portion 805 for guiding the sheet S to the insertion opening 802. The upper guide portion 805 is a guiding member arranged so as to oppose the inclined surface 811a of the lower guide portion 811 and to cover the insertion opening 802 from above.

When starting a reading operation of the sheet S (document) with the reading portion 806, the user places the sheet S on the upper surface 810a of the main body cover 800 and manually moves the sheet S in an insertion direction A (forward direction in the present embodiment) by sliding the sheet S across the upper surface 810a. As a result, the sheet S is guided in a direction toward the insertion opening 802 so as to pass through a guide path between the upper guide portion 805 and the lower guide portion 811 and is inserted to the conveyance path 804.

Note that when the size of the sheet S is large, there is a possibility that the trailing end of the sheet S is placed on the roll cover 22 positioned to the rear of the main body cover 800. The upper surface of the roll cover 22 is formed at a higher position than the upper surface of the main body cover 800 and prevents the sheet S from dropping to the rear of the printer 100. In other words, the roll cover 22 may also be considered a constituent element of the reading portion 806.

An upper end (leading end) of the upper guide portion 805 is at a position that is higher than the upper surface 810a of the main body cover 800 by a height H. In other words, at least a part of the upper guide portion 805 is at a higher position than the upper surface 810a and the upper end of the inclined surface 811a. Positioning the upper end (leading end) of the upper guide portion 805 at the same height or above the upper surface 810a and the upper end of the inclined surface 811a enables the sheet S that moves on the upper surface 810a as if sliding to more reliably abut against the upper guide portion 805. Consequently, the guiding capability of the upper guide portion 805 can be improved.

The reading portion 806 is provided with a sensor (not illustrated) that detects when the sheet S reaches the insertion opening 802. When the sensor detects the sheet S entering the conveyance path 804, the conveyance portion 801 starts a reading conveying operation of the sheet S. Subsequently, the sheet S having passed through the conveyance path 804 and completed the conveying reading operation is discharged from the discharge port 807 toward the basket 6 installed approximately directly below the reading portion 806.

The insertion opening 802 is provided in the upper cover portion 500a that is positioned below the main body cover 800. Due to such a configuration, the user need no longer check the position of the insertion opening 802 by looking into the printer 100 from above and can readily visually confirm the insertion position of the sheet S in a state of standing in front of the printer 100. Furthermore, since the inclined surface 811a that extends forward and diagonally downward is formed in the lower guide portion 811 that supports the lower surface of the sheet S that proceeds toward the insertion opening 802 from the main body cover 800, visibility of the insertion position of the sheet S is further improved. Therefore, according to the configuration of the present embodiment, operability during placement of the sheet S to be read by the reading portion 806 can be improved.

While the main body cover 800 and the reading portion cover 500 both have wall portions of the insertion opening 802 in the present embodiment, the configuration is not restrictive. For example, the wall portion that forms the insertion opening 802 may be entirely a part of the upper cover portion 500a or the upper cover portion 500a may include a part of the lower guide portion 811. Even with such a configuration, due to the reading portion cover 500 positioned below and in front of the main body cover 800 and the insertion opening 802 being formed in a rearward end portion of the reading portion cover 500, operability during placement of the sheet S to be inserted into the insertion opening 802 is improved.

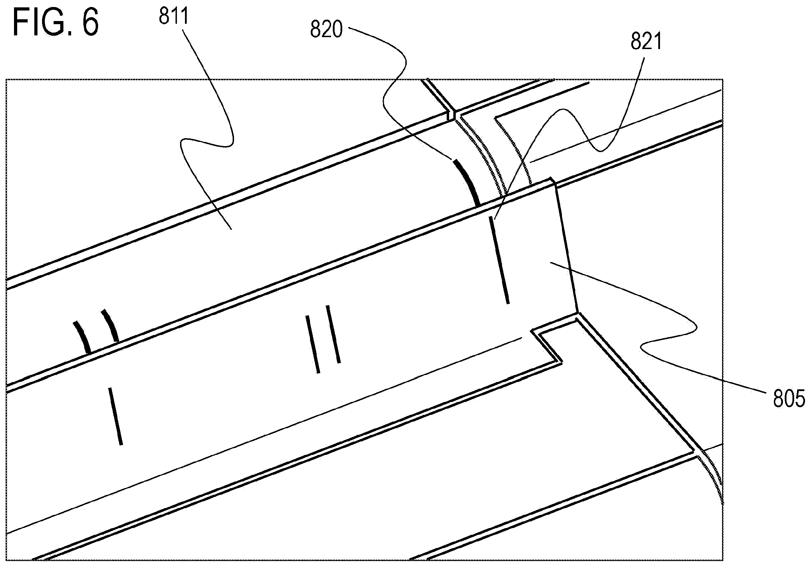

FIG. 6 is a perspective view showing parts of the upper guide portion 805 and the lower guide portion 811 and is an explanatory diagram of indexes provided in the guide portions to assist in placement operations of documents. A reference marker 820 to serve as a guide for the user when inserting the sheet S into the insertion opening 802 is printed on the lower guide portion 811. The reference marker 820 is a marker that indicates an end portion reference position of the sheet S in the width direction, a paper size, reading surfaces (front and rear) of a document, and the like. Providing the reference marker 820 on the inclined surface 811a of the lower guide portion 811 makes a document placement position clearer and further improves operability. Note that a method of providing the reference marker 820 is not limited to printing and, for example, when the lower guide portion 811 is formed of a resin, the reference marker 820 may be provided by engraving. In addition, the provided reference marker 820 need not indicate all of the placement position, size, and reading surface of the sheet S and may indicate any one thereof.

The upper guide portion 805 is provided with a reference marker 821 that is a marker that indicates an end portion reference position of the sheet S in the width direction, a paper size, reading surfaces (front and rear) of a document, and the like in a similar manner to the reference marker 820 of the lower guide portion 811. Providing the reference marker 820 on the inclined surface 811a of the lower guide portion 811 makes a document placement position clearer and further improves operability.

In addition, preferably, the upper guide portion 805 is formed of a transmissive material such as acrylic. By forming the upper guide portion 805 transparently, the user can visually confirm the reference marker 820 of the lower guide portion 811 and the position of the insertion opening 802 even through the upper guide portion 805 from the front side of the printer 100, further improving operability. Note that the upper guide portion 805 need not be completely transparent and only needs to have sufficient transparency to identify the positions of the reference marker 820 and the insertion opening 802. Alternatively, the visibility of the lower guide portion 811 can be improved by making a width of the upper guide portion 805 in the left-right direction smaller than a width of the lower guide portion 811 in the left-right direction or providing slits in the upper guide portion 805.

### Switching of Positions of Upper Guide Portion

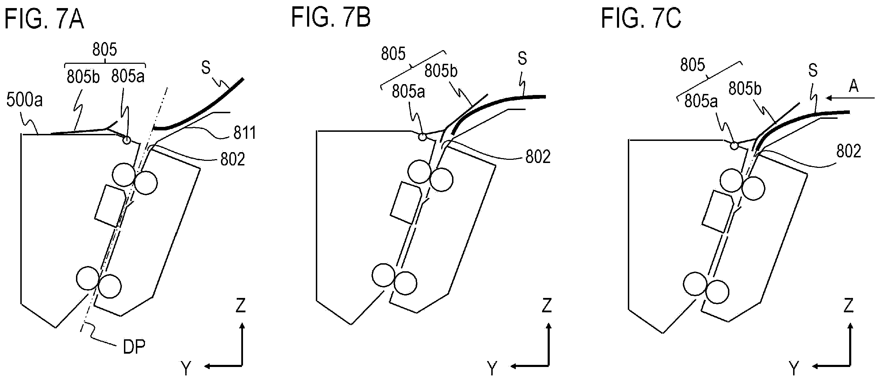

Next, switching of positions of the upper guide portion 805 will be described. FIGS. 7A to 7C are explanatory diagrams of switching of positions of the upper guide portion 805 and are schematic sectional views along a similar cross section to FIG. 4.

The upper guide portion 805 has a rotating spindle 805a that rotates around a rotation axis parallel to the X-direction (left-right direction) and a guide portion 805b that extends from the rotating spindle 805a in a direction that intersects with the X-direction. In other words, the upper guide portion 805 is a rotating member that is rotatably supported by the upper cover portion 500a around the rotating spindle 805a. The rotating spindle 805a is supported by the rearward end portion of the upper cover portion 500a.

The upper guide portion 805 is configured to be rotatable to a first position where the upper guide portion 805 covers the insertion opening 802, opposes the lower guide portion 811, and together with the lower guide portion 811 guides the sheet S toward the insertion opening 802 and a second position where the upper guide portion 805 has rotated forward from the first position and has retracted from above the insertion opening 802. FIG. 4 shows a situation where the upper guide portion 805 is at the first position. The first position is a position where the guide portion 805b of the upper guide portion 805 intersects with the imaginary line F and the guide portion 805b opposes the lower guide portion 811. On the other hand, the second position is a position where the upper guide portion 805 does not intersect with the imaginary line F, the guide portion 805b does not oppose the lower guide portion 811, and the upper guide portion 805 has retracted from above the insertion opening 802.

FIG. 7A is a diagram illustrating a situation where the upper guide portion 805 is at the second position. For example, if the sheet S is thick and has low deformability, forcing it to deform along the upper guide portion 805 may cause the sheet S to bend excessively, potentially creating creases in the sheet S. Furthermore, when the sheet S abuts against the upper guide portion 805, the upper guide portion 805 may generate resistance that impedes the conveyance of the sheet S. According to the configuration of the present embodiment, by retracting the upper guide portion 805 to the second position, the sheet S with low deformability can be directly inserted into the insertion opening 802 at an angle along the conveyance path 804 without having to place the sheet S on the main body cover 800. Therefore, the sheet S can be inserted into the insertion opening 802 without damaging the sheet S and with comfortable operability.

In addition, the sheet S is not necessarily always straight and there may be sheets with creases or significant curling. FIG. 7A shows a sheet S with significant curling. In order to guide the sheet S of which a vicinity of a leading end does not form a plane to the insertion opening 802, the upper guide portion 805 is preferably moved to the second position beforehand. In addition, by moving the upper guide portion 805 from the first position to the second position in a state where the leading end portion of the sheet S is placed on the lower guide portion 811, the leading end of the sheet S can be pressed downward from above by the upper guide portion 805. FIG. 7B is a diagram illustrating a situation where the upper guide portion 805 has been moved from the state shown in FIG. 7A to the second position.

After moving the upper guide portion 805 to the second position, the leading end of the sheet S can be readily guided to the insertion opening 802 by grabbing a portion of the sheet S positioned to the rear of the upper guide portion 805 and moving the sheet S in the insertion direction A. FIG. 7C is a diagram showing a situation where the sheet S is moved in the insertion direction A from the state in FIG. 7B and the leading end of the sheet S is guided toward the insertion opening 802.

As described above, according to the configuration of the present embodiment, switching positions of the upper guide portion 805 improves placement ability and conveyance stability of not only sheets with stiffness equivalent to standard plain paper but also sheets S with higher stiffness. In addition, when placing the sheet S with a curled or folded leading end, by temporarily placing the sheet S with the upper guide portion 805 at the second position and subsequently returning the upper guide portion 805 to the first position, a path to guide the leading end of the sheet S can be created. Therefore, an operation of feeding the sheet S to the conveyance path 804 can be comfortably performed.

While the upper guide portion 805 is configured to be movable between the first position and the second position by rotating in the present embodiment, such a configuration is not restrictive. For example, a configuration may be adopted where the upper guide portion 805 is movable between the first position and the second position due to being attachable/detachable or slidable.

### Locking Structure of Upper Guide Portion

Next, a locking structure of the upper guide portion 805 for fixing a posture of the upper guide portion 805 will be described. The printer 100 is equipped with a locking member 809 ((holding member) for locking (holding) the upper guide portion 805 at the first position.

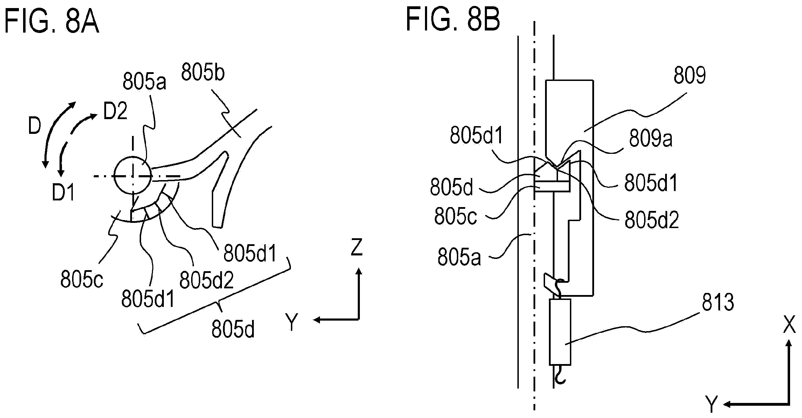

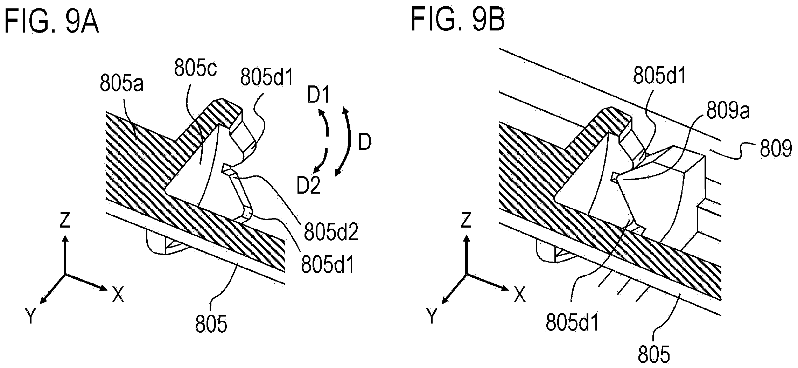

FIGS. 8A and 8B are diagrams showing a general configuration of a locking structure of the upper guide portion 805. FIG. 8A is a schematic sectional view when the upper guide portion 805 is viewed in the leftward direction. FIG. 8B is a schematic view when the locking structure of the upper guide portion 805 is viewed in the upward direction. FIGS. 9A and 9B are perspective views showing the locking structure of the upper guide portion 805. In FIGS. 9A and 9B, in order to clearly show the locking structure, the upper guide portion 805 has been cut along a cross section parallel to the X-Y plane. FIG. 9A is a diagram showing a configuration of a cam 805d of the upper guide portion 805. FIG. 9B is a diagram showing a situation where the upper guide portion 805 and the locking member 809 are engaged with each other.

The upper guide portion 805 has a plate-like flange 805c that protrudes from the rotating spindle 805a in a direction intersecting the X-direction and the cam 805d provided on the flange 805c. The cam 805d includes two protruded portions 805d1 (crest portions) that protrude from the flange 805c in the +X-direction (rightward direction). The two protruded portions 805d1 are arranged along the rotating direction D of the upper guide portion 805. Each protruded portion 805d1 has a triangular shape of which a width in the rotating direction D gradually narrows toward the +X direction, and a leading end thereof has a rounded R shape. In addition, a depressed portion 805d2 (root portion) that is depressed in the -X-direction (leftward direction) is formed between the two protruded portions 805d1. The depressed portion 805d2 has a portion with a triangular shape of which a width in the rotating direction D gradually narrows toward the- X direction, and a clearance is formed at a bottom portion thereof to prevent interference with the locking member 809.

The printer 100 is equipped with the locking member 809 for locking the cam 805d that is a locked portion and a spring member 813 that is a biasing member for biasing (pulling) the locking member 809 in the -X-direction. The locking member 809 has a locking portion 809a that is a protruded portion protruding in the -X-direction. The locking portion 809a has a triangular shape of which a width in the rotating direction D gradually narrows toward the - X direction, and a leading end thereof has a rounded R shape. The spring member 813 is a tension spring mounted to the end portion of the locking member 809 in the -X-direction so that a biasing direction with respect to the locking member 809 is the -X-direction. In the present embodiment, the locking member 809 and the spring member 813 are supported by the upper cover portion 500a of the reading portion cover 500.

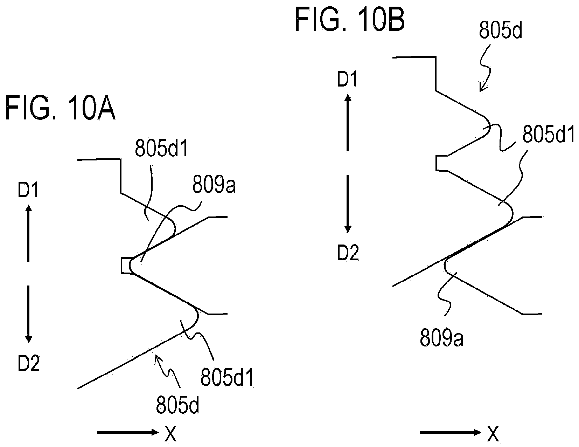

FIGS. 10A and 10B are explanatory diagrams of a positional relationship between the cam 805d of the upper guide portion 805 and the locking portion 809a of the locking member 809. In FIGS. 10A and 10B, each of the cam 805d and the locking portion 809a is shown unfolded onto a plane to clearly show the relationship between the cam 805d and the locking portion 809a. FIG. 10A is a diagram illustrating a situation where the upper guide portion 805 is at the first position. FIG. 10B is a diagram showing a situation where the upper guide portion 805 is between the first position and the second position and the locking portion 809a and the protruded portion 805d1 abut against each other.

When the upper guide portion 805 is at the first position, the locking portion 809a is positioned between the two protruded portions 805d1 of the cam 805d. Since the locking member 809 is biased in the -X-direction by the spring member 813, the posture that causes the locking portion 809a be positioned between the two protruded portions 805d1 or, in other words, to penetrate into the depressed portion 805d2 is maintained. At this point, both of two inclined surfaces of the locking portion 809a abut against inclined surfaces of the depressed portion 805d2 (inclined surface of one protruded portion 805d1 and inclined surface of other protruded portion 805d1). Due to such a configuration, the upper guide portion 805 is locked by the locking member 809, movement of the upper guide portion 805 in the rotating direction D is restricted, and the upper guide portion 805 is held at the first position.

Next, an operation of rotating the upper guide portion 805 from the first position to the second position will be described. In the rotating direction D of the upper guide portion 805, a direction from the first position toward the second position will be defined as a first rotating direction D1 and a direction from the second position toward the first position that is opposite to the first rotating direction D1 will be defined as a second rotating direction D2. As shown in FIG. 8A, when the upper guide portion 805 is viewed in the leftward direction (-X-direction), the first rotating direction D1 is a direction in which the upper guide portion 805 rotates counterclockwise and the second rotating direction D2 is a direction in which the upper guide portion 805 rotates clockwise.

When the user manually rotates the upper guide portion 805 in the first rotating direction D1 from the first position, the locking member 809 is pushed by the cam 805d and moves in the +X-direction against the biasing force of the spring member 813 while sliding on a surface of the protruded portions 805d1 of the cam 805d. In addition, when an apex of the locking portion 809a passes over an apex of the protruded portion 805d1, the locking member 809 moves in the -X-direction due to the biasing force of the spring member 813 while sliding on the surface of the protruded portions 805d1 of the cam 805d. Subsequently, as the upper guide portion 805 further rotates in the first rotating direction D1, the locking portion 809a separates from the cam 805d. As described above, by rotating the upper guide portion 805 at the first position by a certain angle or more in the first rotating direction D1, the locking portion 809a passes over the protruded portions 805d1 and moves outside an acting surface of the cam 805d. In the present embodiment, the locking portion 809a is configured to pass over the protruded portions 805d1 by rotating the upper guide portion 805 approximately 35 degrees from the first position in the first rotating direction D1. In addition, the locking portion 809a is configured to separate from the cam 805d by rotating the upper guide portion 805 approximately 70 degrees from the first position in the first rotating direction D1.

As the upper guide portion 805 further rotates in the first rotating direction D1 after the locking portion 809a separates from the cam 805d, the guide portion 805b of the upper guide portion 805 abuts against the upper cover portion 500a and the movement of the upper guide portion 805 in the first rotating direction D1 is restricted. The position where the movement in the first rotating direction D1 is restricted is the second position (position shown in FIG. 7A) of the upper guide portion 805.

In the present embodiment, the upper guide portion 805 is not fixed between the first position and the second position but is rotatable to the second position where the upper guide portion 805 abuts against the upper cover portion 500a. For example, when adopting a configuration where a restricting mechanism for restricting rotation of the rotating spindle 805a is provided to fix the upper guide portion 805 between the first position and the second position, a pressing force when the upper guide portion 805 is pushed in the first rotating direction D1 concentrates in a vicinity of a shaft portion (base) of the upper guide portion 805. On the other hand, adopting a configuration where the upper guide portion 805 abuts against the upper cover portion 500a at the second position as in the present embodiment enables the pressing force to be dispersed across the entire upper guide portion 805. Therefore, according to the configuration of the present embodiment, a concentration of force in a vicinity of the shaft portion (base) of the upper guide portion 805 can be suppressed and, therefore, damage to the upper guide portion 805 can be suppressed.

Next, an operation of rotating the upper guide portion 805 from the second position to the first position will be described. When the user manually rotates the upper guide portion 805 from the second position in the second rotating direction D2, as shown in FIG. 10B, the protruded portion 805d1 of the cam 805d on a downstream side in the second rotating direction D2 abuts against the locking portion 809a. In addition, when the upper guide portion 805 is further rotated in the second rotating direction D2, the locking member 809 is pushed by the cam 805d and moves in the +X-direction against the biasing force of the spring member 813 while sliding on the surface of the protruded portions 805d1 of the cam 805d. When the apex of the locking portion 809a passes over the apex of the protruded portions 805d1, the locking member 809 moves in the -X-direction due to the biasing force of the spring member 813 while sliding on the surface of the protruded portions 805d1 of the cam 805d. In this manner, the locking portion 809a moves to the first position between the two protruded portions 805d1 and abuts against the two protruded portions 805d1.

When the locking portion 809a passes over the protruded portions 805d1, the biasing force of the spring member 813 acts to move the upper guide portion 805 to the first position. Therefore, the upper guide portion 805 is prevented from rotating in the second rotating direction D2 beyond the first position and the user can readily move the upper guide portion 805 to the first position.

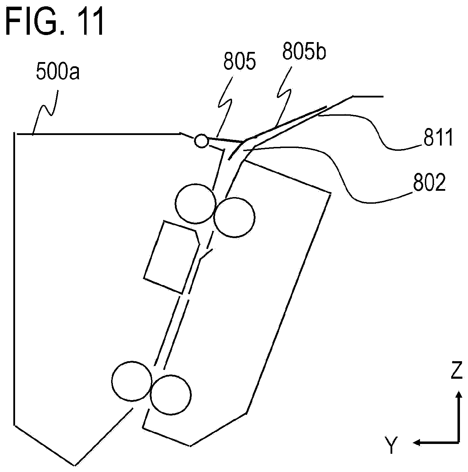

In addition, even if the upper guide portion 805 rotates in the second rotating direction D2 from the first position, the guide portion 805b of the upper guide portion 805 abuts against the lower guide portion 811 and further movement of the upper guide portion 805 is restricted. A position of the upper guide portion 805 at this point will be defined a third position. In other words, even when the upper guide portion 805 rotates in the second rotating direction D2, a concentration of force in a vicinity of the shaft portion (base) of the upper guide portion 805 can be suppressed and, therefore, damage to the upper guide portion 805 can be suppressed. FIG. 11 is a diagram illustrating a situation where the upper guide portion 805 is at the third position.

When the upper guide portion 805 is at the third position, the locking portion 809a abuts against the protruded portion 805d1 on the upstream side in the second rotating direction D2. In this manner, by configuring the locking portion 809a so that the locking portion 809a cannot disengage from the depressed portion 805d2, when the upper guide portion 805 is at the third position, the locking member 809 pushes the upper guide portion 805 in a direction that the upper guide portion 805 returns to the first position due to the biasing force of the spring member 813. Therefore, since the upper guide portion 805 automatically returns to the first position from the third position when the user releases their hand, the position of the upper guide portion 805 can be readily adjusted and conveyance errors of the sheet S can be suppressed.

According to the configuration of the present embodiment, since the upper guide portion 805 is locked to be held at the first position where the sheet S is guided, the upper guide portion 805 can guide sheets S with various stiffnesses (thicknesses) and document conditions toward the insertion opening 802. In addition, since the upper guide portion 805 can be moved from the first position to the second position as needed, reading operations of various sheets S can be suitably performed. Furthermore, even if the user unintentionally presses the upper guide portion 805 or the like and causes a load to be applied thereto, since the load is prevented from concentrating at a specific location of the upper guide portion 805, a risk of damage can be reduced.

Note that an applicable range of the present disclosure is not limited to recording apparatuses equipped with the recording portion 3. For example, the present disclosure can also be applied to image reading apparatuses which are not equipped with the sheet supply portion 2 and the recording portion 3 and which only have a function equivalent to the reading portion 806 that reads images in documents.

Various embodiments have been described in detail above but it will be understood that the present disclosure is not limited to these embodiments and encompasses all modifications, variants, alternatives and equivalents falling within the scope of the appended claims.

## Claims

1. An image reading apparatus configured to read a document, the image reading apparatus comprising:
a reading unit configured to read a document;
a first cover portion forming a part of an upper surface of the image reading apparatus, the first cover portion being configured so that the document to be read by the reading unit can be placed thereon;
a second cover portion positioned below the first cover portion and configured to cover an upper portion of the reading unit, the second cover portion forms a part of an exterior housing of the image reading apparatus; and
a conveyance path for conveying a document inserted from an insertion opening between the first cover portion and the second cover portion toward the reading unit.

2. The image reading apparatus according to claim 1, further comprising:
a guide portion configured to guide a document toward the insertion opening, the guide portion positioned above the insertion opening so as to oppose the first cover portion.

3. The image reading apparatus according to claim 2, wherein
the guide portion has transparency.

4. The image reading apparatus according to claim 2 or 3, wherein
a conveying passage of a document in the conveyance path has a straight shape, and
the guide portion is configured to be movable between a first position that intersects with an imaginary line that is an extension of the conveying passage and a second position that does not intersect with the imaginary line.

5. The image reading apparatus according to claim 4, wherein
the guide portion has a rotating spindle supported by the second cover portion and is configured to be rotatable between the first position and the second position around the rotating spindle.

6. The image reading apparatus according to claim 5, wherein
the guide portion abuts against an upper surface of the first cover portion at the second position.

7. The image reading apparatus according to claim 5 or 6, wherein
the guide portion further has a locked portion provided on the rotating spindle, and
the image reading apparatus further comprises a locking portion which, in a case where a direction in which the guide portion proceeds from the first position to the second position is defined as a first rotating direction, engages with the locked portion in a case where the guide portion is at the first position to restrict movement of the guide portion in the first rotating direction.

8. The image reading apparatus according to claim 7, further comprising:
a biasing portion configured to bias the locked portion in a biasing direction parallel to a rotation axis of the rotating spindle, wherein
the locked portion includes a depressed portion that is depressed in the biasing direction, a width of the depressed portion in the first rotating direction gradually narrowing toward the biasing direction, and
in a case where the guide portion is at the first position, the locking portion abuts against the depressed portion.

9. The image reading apparatus according to claim 8, wherein
in a case where a direction opposite to the first rotating direction is defined as a second rotating direction, the guide portion is configured to be rotatable from the first position to a third position in the second rotating direction, the third position being a position where the guide portion abuts against the second cover portion, and
in a case where the guide portion is at the third position, the locking portion abuts against the depressed portion.

10. The image reading apparatus according to one of claims 2 to 9, wherein
an inclined surface which heads downward the closer it is to the second cover portion and which opposes the guide portion is formed at an end portion of the first cover portion adjacent to the second cover portion.

11. The image reading apparatus according to claim 10, wherein
an upper end of the guide portion is positioned at a same height as or above an upper end of the inclined surface.

12. The image reading apparatus according to claim 10 or 11, wherein
the inclined surface is provided with a reference marker indicating at least one of a placement position, a size, and a reading surface of a document.

13. The image reading apparatus according to one of claims 1 to 12, wherein
in a case where a direction from the first cover portion toward the second cover portion in directions intersecting with a vertical direction is defined as a first direction, the conveyance path extends downward in the vertical direction and in the first direction from the insertion opening.

14. The image reading apparatus according to one of claims 1 to 13, further comprising:
a first cover member including the first cover portion, the first cover member including a part of a wall portion of the conveyance path; and
a second cover member including the second cover portion, the second cover member including a part of the wall portion of the conveyance path and being configured to be rotatable between a closed position where the second cover member forms the conveyance path together with the first cover member and an open position where the second cover member separates from the first cover member and exposes the wall portion of the conveyance path.

15. A recording apparatus, comprising:
the image reading apparatus according to one of claims 1 to 14; and
a recording portion capable of recording an image on a recording material based on information of a document read by the reading unit.

16. The recording apparatus according to claim 15, further comprising:
a roll holding portion configured to hold a roll sheet around which a sheet to be supplied to the recording portion is wound; and
a roll cover positioned above the second cover portion and configured to cover the roll holding portion from above, wherein
in a direction intersecting with a vertical direction, the first cover portion, the second cover portion, and the roll cover are arranged in this order.

17. The recording apparatus according to claim 15 or 16, further comprising:
a storage portion configured to store sheets having passed through the conveyance path or the recording portion, the storage portion being arranged below the reading unit and the recording portion.

18. The recording apparatus according to one of claims 15 to 17, wherein
the first cover portion configured to cover an upper portion of the recording portion.
